# EUROPÄISCHE PATENTSCHRIFT

(11) **EP 0 491 209 B1**
(45) Veröffentlichungstag und Bekanntmachung des Hinweises auf die Patenterteilung: **19.09.2001**
(21) Anmeldenummer: 91120624.1
(22) Anmeldetag: 30.11.1991
(51) Int. Cl.: H04B 14/02, H04B 10/14

(54) **Signalverarbeitung für optisches Übertragungssystem**
Signal processing for optical transmission system
Traîtement de signal pour système de transmission optique

(30) Priorität: 15.12.1990 DE 4040170
(43) Veröffentlichungstag der Anmeldung: 24.06.1992
(73) Patentinhaber: ALCATEL, 75008 Paris (FR)
(72) Erfinder: Wedding, Berthold, Dr., W-7015 Korntal 2 (DE)
(74) Vertreter: Knecht, Ulrich Karl, Dipl.-Ing.

(56) Entgegenhaltungen:
- DE-A- 3 744 537
- GB-A- 2 179 517

## Beschreibung

Die Erfindung betrifft ein übertragungssignal nach dem Oberbegriff von Anspruch 1 sowie eine Sendeeinrichtung nach dem Oberbegriff von Anspruch 4 und eine Empfangseinrichtung nach dem Oberbegriff von Anspruch 9.

Bei Sendeeinrichtungen ist es erstrebenswert, den Minimalwert der Sendeamplitude z.B. aufgrund amplitudenabhängiger Verzerrungen und der Lebensdauer der Trägerquelle zu optimieren. Dies kann bedeuten, daß bei festgelegten übertragungsparametern ein minimaler Maximalwert der Sendeamplitude des gesendeten übertragungssignals angestrebt wird, wobei zu beachten ist, daß der minimale Minimalwert der Signalamplitude einen trägerquellenspezifischen Schwellwert nicht unterschreitet.

Aus der US-PS 4 789 987 ist eine optische Sendeeinrichtung bekannt, die den Minimalwert der Signalamplitude des übertragungssignals automatisch über einen trägerquellenspezifischen Schwellwert regelt und dabei die Maximalamplitude des übertragungssignals minimal hält. Bei Unterschreiten des Schwellwertes tritt bei der bekannten Signalquelle, die eine Laserdiode ist, der sogenannte Clipping-Effekt auf, der zu einer Verzerrung des übertragungssignals führt.

Betrachtet man nun die Wahrscheinlichkeitsverteilung der Signalamplituden, die zur Modulation der Trägerquellen dienen, stellt man fest, daß eines der beiden Enden dieser Verteilung unter dem Schwellwert endet, was zu einer Verzerrung des übertragungssignals führt. Um die Wahrscheinlichkeit, daß die Amplitude den Schwellwert unterschreitet, zu verringern, wird bei der bekannten Schaltung der Gleichstromanteil des Injektionsstromes erhöht. Dies hat zur Folge, daß der Maximalwert, sowie der Mittelwert der Wahrscheinlichkeitsverteilung der Sendeamplituden zunimmt.

Aus DE 3744537 A1 ist eine Übertragung eines Tonsignals bekannt, bei der die positiven und negativen Tonsignalanteile getrennt auf zwei veschiedenen Kanälen durch Pulsamplitudenmodulation ( PAM ) übertragen werden. Alle Sendestellen sind bezüglich der Puls-Sendezeitpunkte synchronisiert. Bei einer Übertragung der Kanäle im Zeitmultiplexverfahren sind die Abtastzeitpunkte zeitgleich zu wählen und einer der beiden PAM-Pulse zu verzögern. Bei einer Übertragung mit verschiedenen Lichtwellenlängen ist ein zweiter Laser in der Sendestelle erforderlich. In der Empfangstelle werden die empfangenen PAM-Pulse voneinander subtrahiert und anschließend eine Demodulation durchgeführt.

Der Erfindung liegt die Aufgabe zugrunde, eine Möglichkeit zu schaffen, bei der der Maximalwert so wie der Mittelwert der Wahrscheinlichkeitsverteilung der Signalamplitude eines gesendeten übertragungssignals minimierbar ist, ohne daß Verzerrungen der übertragungssignale durch Unterschreitung eines trägerquellenspezifischen Schwellwerts auftreten.

Die Aufgabe wird durch die Merkmale der Ansprüche 1, 3 und 7 gelöst.

Ein besonderer Vorteil der Erfindung liegt darin, daß die Energiedichte für kleine Amplitudenwerte des gesendeten übertragungssignale erhöht wird.

Zwei Ausführungsbeispiele der Erfindung werden anhand von sieben Figuren im folgenden beschrieben. Es zeigen:
- Fig. 1: ein erstes Ausführungsbeispiel einer erfindungsgemäßen Sendeeinrichtung und eine damit verbundene erfindungsgemäße Empfangseinrichtung als Blockschaltbild,
- Fig. 2A: ein erfindungsgemäßes Übertragungssignal, sowie
- bis 2M: weitere zur Erzeugung und Auswertung dieses Signales notwendige Zwischensignale einschließlich dem Ein- und Ausgangssignal,
- Fig. 3: ein zweites Ausführungsbeispiel einer erfindungsgemäßen Sendeeinrichtung und eine damit verbundene erfindungsgemäße Empfangseinrichtung als Blockschaltbild,
- Fig. 4: den Laserinjektionsstrom I_{J} eines in der erfindungsgemäßen Sendeeinrichtung befindlichen Lasers über die Zeit aufgetragen,
- Fig. 5: den Laserinjektionsstrom I_{J} eines in einer bekannten Sendeanordnung befindlichen Lasers über die Zeit aufgetragen,
- Fig. 6: eine Wahrscheinlichkeitsverteilung für das Auftreten der Amplitudenwerte des Injektionsstromes eines in der erfindungsgemäßen Sendeeinrichtung befindlichen Lasers, und
- Fig. 7: eine Wahrscheinlichkeitsverteilung für das Auftreten der Amplitudenwerte des Injektionsstromes eines in der bekannten Sendeeinrichtung befindlichen Lasers.

Die Erfindung wird im folgenden am Übertragungssignal einer Sende- und Empfangseinrichtung zur übertragung optischer, analoger Signale beschrieben, jedoch wird darauf hingewiesen, daß sie auch Übertragungssignale sowie Sende- und Empfangseinrichtungen umfaßt, bei denen die übertragung z.B. über ein Funkfeld oder auf eine andere Weise stattfindet. Die Erfindung eignet sich auch zur Anwendung bei der übertragung von digitalen Signalen, insbesondere zur übertragung digitaler Signale, die auch einen negativen Zustand, wie z.B. HDB3 codierte Signale, aufweisen.

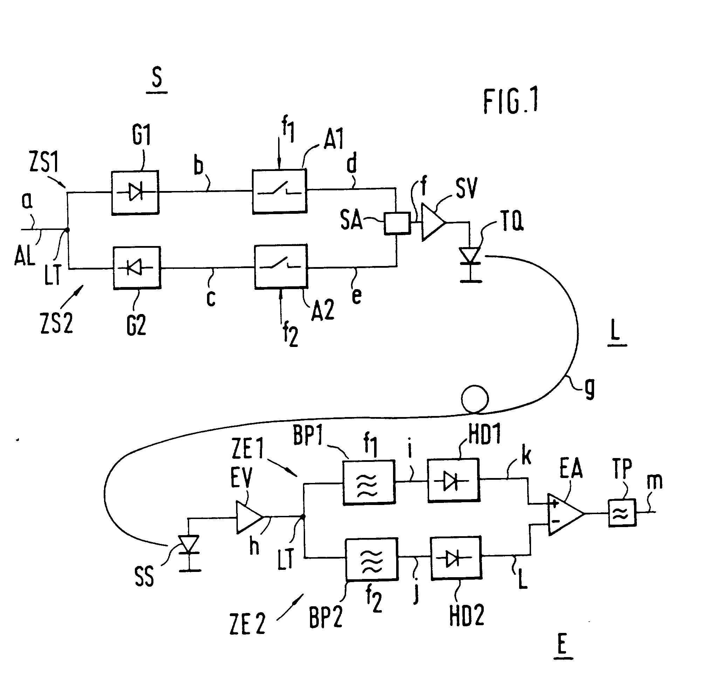

In Fig. 1 ist ein erstes Ausführungsbeispiel einer erfindungsgemäßen Sendeeinrichtung S und einer erfindungsgemäßen Empfangseinrichtung E als Blockschaltbild abgebildet, die mit einem Lichtwellenleiter L miteinander verbunden sind. Es ist auch möglich (nicht abgebildet), daß die Sendeeinrichtung S und die Empfangseinrichtung E z.B. über eine Vermittlungsstelle oder einem passiven Koppler mit anderen Sende- und Emfpangseinrichtungen verbunden sind.

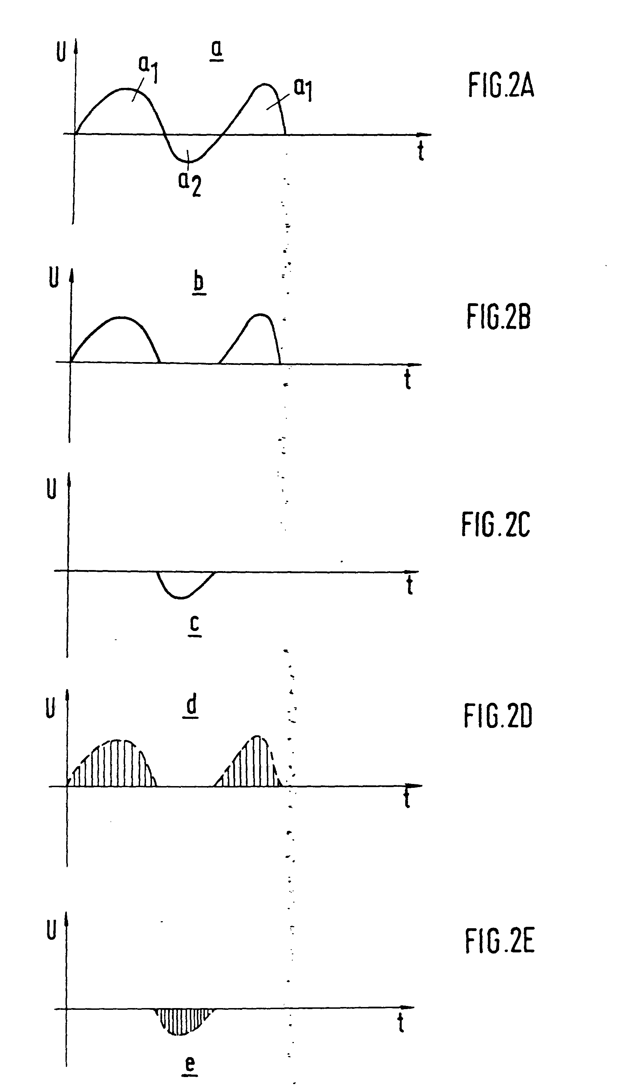

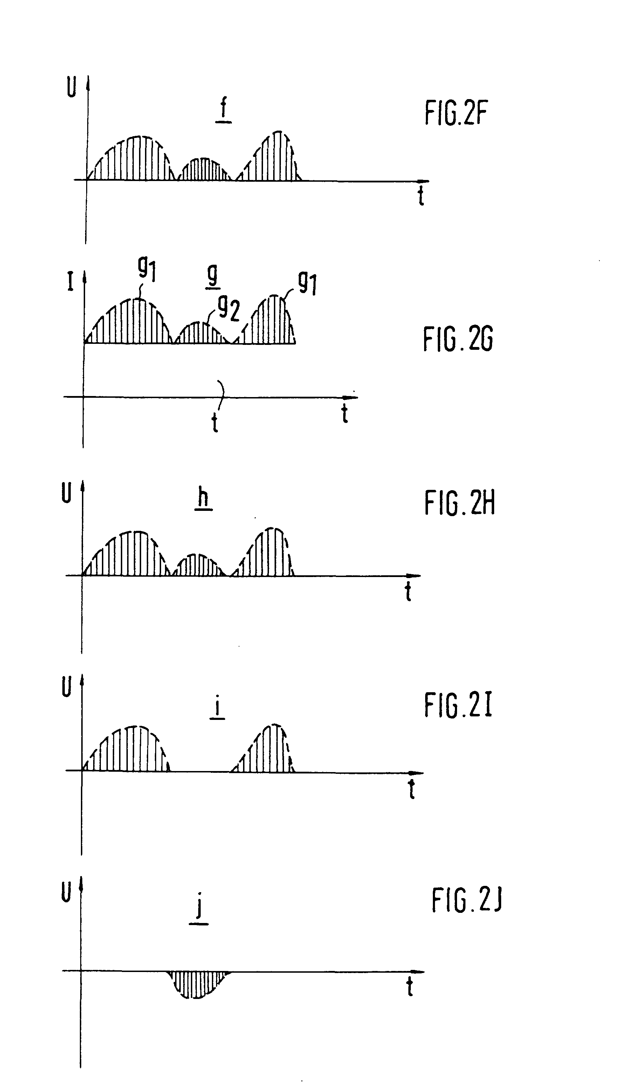

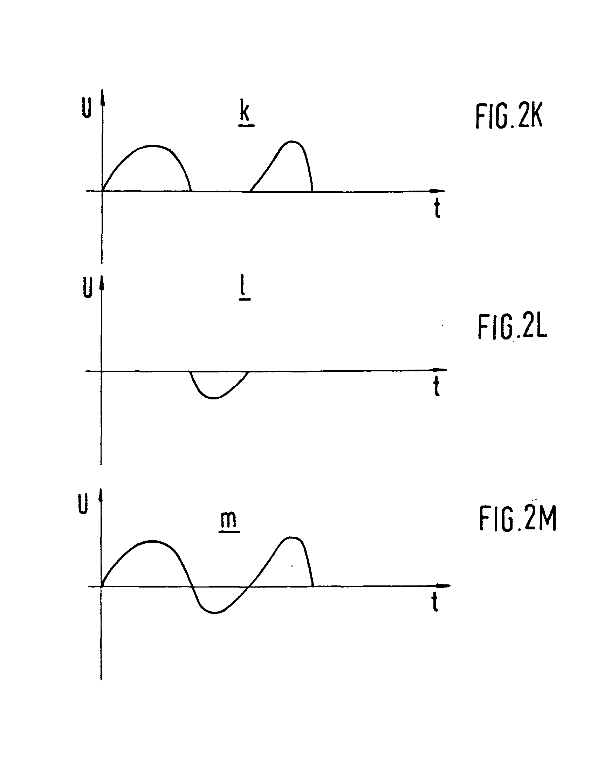

In Fig. 2A bis 2M sind mehrere Signale über die Zeit aufgetragen. Fig. 2A enthält das die zu übertragende Nachricht enthaltende Signal, das Eingangssignal a, Fig. 2G enthält das übertragungssignal g und Fig. 2M zeigt das die zu übertragende Nachricht enthaltende Signal m am Ausgang des Empfängers. In den dazwischenliegenden Figuren sind Zwischensignale oder Signalteile abgebildet, die das zu übertragende Signal zwischendurch annimmt.

Der folgende Teil der Beschreibung bezieht sich auf oie Vorrichtungsmerkmale der Fig. 1 und die Signale aus Fig. 2A bis Fig. 2M.

In der Sendeeinrichtung S wird das Eingangssignal a über eine Anschlußleitung AL und einem Leistungsteiler LT, einem ersten Zweig ZS1 und einem zweiten Zweig ZS2 zugeführt. Die beiden Zweige ZS1 und ZS2 enthalten jeweils einen Gleichrichter G1 und G2, die, bezogen auf den Leistungsteiler LT, entgegengesetzt gerichtet sind. Im Gleichrichter G1 werden vom Signal a diejenigen Signalteile a₂, deren Amplitude einen negativen Wert aufweist, ausgefiltert, wodurch das Signal b entsteht, und im Gleichrichter G2 werden vom Signal a diejenijgen Signalteile a₁, deren Amplituden einen positiven Wert aufweisen, ausgefiltert, wodurch das Signal c entsteht. Das Signal b wird anschließend in einem Abtaster A1 pulsamplitudenmoduliert, d.h. in ein abgetastetes Signal d umgewandelt. Entsprechend wird das Signal c in einem zweiten Abtaster A2 in ein abgetastetes Signal e umgewandelt. Im ersten Abtaster A1 wird eine erste Abtastfrequenz f₁ verwendet, die sich von der im zweiten Abtaster A2 anliegenden Abtastfrequenz f₂ unterscheidet. Die beiden Zweige ZS1 und ZS2 sind jeweils hinter den Abtastern A1 und A2 mit einem Addierer SA verbunden, indem die beiden abgetasteten Signale d und e zu einem Modulationssignal f phasenrichtig derart addiert werden, so daß nur noch eine positive Spannungsamplitude vorliegt.

Im Ausführungsbeispiel wird vom einen Signal a ausgegangen, dessen Spannungsamplitude um den Schwellwert U = 0 Volt oszilliert. Es ist aber auch möglich, daß dieses Signal mit einem Gleichspannungsanteil behaftet ist, der unterdrückt werden muß, bevor die Teilsignale dem Gleichrichter zugeführt werden.

Im bisher beschriebenen Teil der Sendeeinrichtung S wird somit, allgemein formuliert, der negative Teil eines Wechselspannungssignals in den positiven Teil gespiegelt, wobei die beiden Teile zur Identifikation unterschiedlich abgetastet sind.

Das Modulationssignal f wird nun in bekannter Weise in einem Verstärker SV verstärkt und einer Trägerquelle TQ als Modulationssignal zugeführt. Als Modulationsart ist Amplitudenmodulation vorgesehen, wobei grundsätzlich auch Phasenmodulation möglich ist.

Als Trägerquelle TQ ist ein direkt modulierter Laser angeordnet, dem zur Überwindung des Schwellwertes des Injektionsstromes Iₜₕ zusätzlich noch ein Gleichstromanteil des Injektionsstromes I_{J} zugeführt wird. Das übertragungssignal g weist somit einen Träger t und ein die zu übertragende Nachricht enthaltendes Signal g auf. Das Signal g besteht aus zwei Signalteilen, einem ersten Signalteil g₁ und einem zweiten Signalteil g₂, wobei der erste Signalteil g₁ die gleichen Nachrichten enthält, wie der erste Signalteil a₁ und der zweite Signalteil g₂ die gleichen Nachrichten enthält, wie der zweite Signalteil a₂ des zu übertragenden Signals a. Das übertragungssignal g wird über einen Lichtwellenleiter L der Empfangseinrichtung E zugeführt.

In der Empfangseinrichtung E wird das übertragungssignal g in bekannter Art und Weise in einer Signalsenke SS, einer Photodiode, empfangen, der Träger in bekannter Art und Weise abgetrennt und der Rest, in einem Verstärker EV verstärkt und als Emfpangssignal h einem Leistungsteiler LT zugeführt, der mit einem ersten Zweig ZE1 und einem zweiten Zweig ZE2 verbunden ist. In den beiden Zweigen ZE1, ZE2 sind jeweils ein Bandpaßfilter BP1 und BP2 und jeweils nachfolgend ein Hüllkurvendemodulator HD1, HD2 oder ein Synchrondemodulator (nicht abgebildet) angeordnet, bevor die beiden Zweige in einem Addierer EA wieder zusammengeführt sind. In jedem der Zweige ZE1 und ZE2 wird nun im Bandpaßfilter BP1, BP2 nur der Teil des Empfangsteils H weitergeleitet, der mit der entsprechenden Frequenz f₁, f₂ abgetastet ist. Im ersten Zweig ZE1 wird der mit der Frequenz f₁ abgetastete Signalteil weitergeleitet, wodurch der abgetastete Signalteil i entsteht und im zweiten Zweig ZE2 wird der mit der Frequenz f₂ abgetastete Signalteil weitergeleitet, wodurch der Signalteil j entsteht. Signalteil i wird dem Hüllkurvendemodulator HD1 zugeführt und der Signalteil k mit positiver Amplitude erzeugt. Signalteil j wird dem Hüllkurvendemodulator HD2 zugeführt, indem der Signalteil l mit negativer Amplitude erzeugt wird. Die Signalteile k und l werden im Subtrahierer EA zusammengeführt und einem Tiefpaß TP zugeleitet, an dessen Ausgang ein dem Empfangssignal a entsprechendes Ausgangssignal m anliegt. Es ist auch möglich, ein Signalteil in einem Zweig zu invertieren und die Signalteile aus beiden Zweigen ZE1 und ZE2 in einem Addierer zusammenzuführen.

Allgemein formuliert werden in der Empfangseinrichtung E die beiden abgetasteten Signalteile e und d aufgrund der unterschiedlichen Abtastung identifiziert, mit dem ursprünglichen Vorzeichen versehen und wieder zusammengeführt.

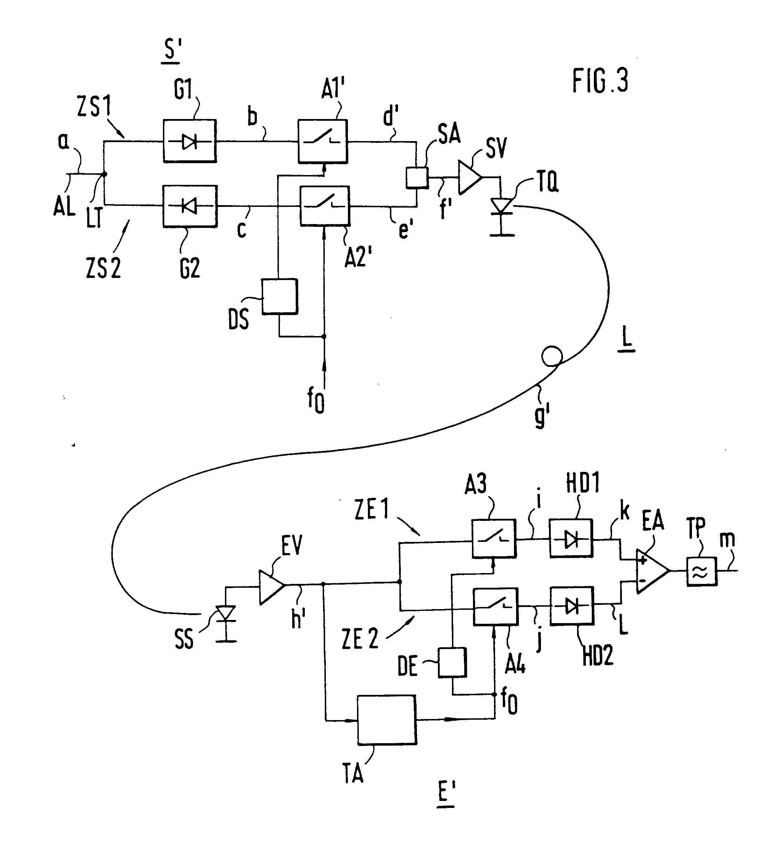

In Fig. 3 ist ein zweites Ausführungsbeispiel einer erfindungsgemäßen Sendeeinrichtung S' und einer erfindungsgemäßen Empfangseinrichtung E' als Blockschaltbild abgebildet. Das zweite Ausführungsbeispiel stimmt mit dem ersten Ausführungsbeispiel weitgehend überein, es werden daher nur die Unterschiede beschrieben.

Der Unterschied zwischen dem Sender S' gegenüber dem Sender S aus dem ersten Ausführungsbeispiel liegt darin, daß der Sender S' zwei Abtaster A1' und A2' aufweist, die mit der gleichen Abtastfrequenz fₒ abgetastet werden, wobei die Phase der Ansteuerimpulse, die dem Abtaster A1' zugeführt werden, gegenüber der Phase der Ansteuerimpulse, die dem Abtaster A2' zugeführt werden, durch ein Verzögerungsglied DS um eine Verzögerungszeit T phasenverzögert sind. Die Signale d', e', f', g' sowie h' sind somit pulsamplitudenmodulierte Signale, die alle mit der gleichen Abtastfrequenz fₒ abgetastet sind.

Im Empfänger E' sind gegenüber dem Empfänger E aus dem ersten Ausführungsbeispiel die Bandpaßfilter BP1 und BP2 durch die Abtaster A3, A4 und dem Phasenverzögerungsglied DE ersetzt. Die beiden Abtaster A3 und A4 werden mit der gleichen Abtastfrequenz fₒ, wie die beiden Abtaster A1' und A2', angesteuert. Die Ansteuerimpulse für den Abtaster A3 sind dabei durch ein Phasenverzögerungsglied DE mit der gleichen Verzögerungszeit T, wie beim Sender S', gegenüber den Ansteuerimpulsen für den Abtaster A4 phasenverzögert. Die Taktfrequenz fₒ für die Ansteuerimpulse, die den Abtastern A3 und A4 zugeführt werden, kann durch ein dem Fachmann bekanntes Verfahren mit Hilfe einer Taktableitung TA aus dem übertragungssignal g', oder auch durch einen lokalen Oszillator (nicht abgebildet) gewonnen werden. Die Signale b und c werden in den Abtastern A1, A2 somit in zwei unterschiedliche Zeitschlitze gelegt, auf die die Abtaster A3, A4 jeweils getrennt zugreifen. Der Vorteil gegenüber dem ersten Ausführungsbeispiel liegt darin, daß nur eine einzige Abtastfrequenz und somit eine geringere Bandbreite für das erfindungsgemäße übertragungssignal benötigt wird.

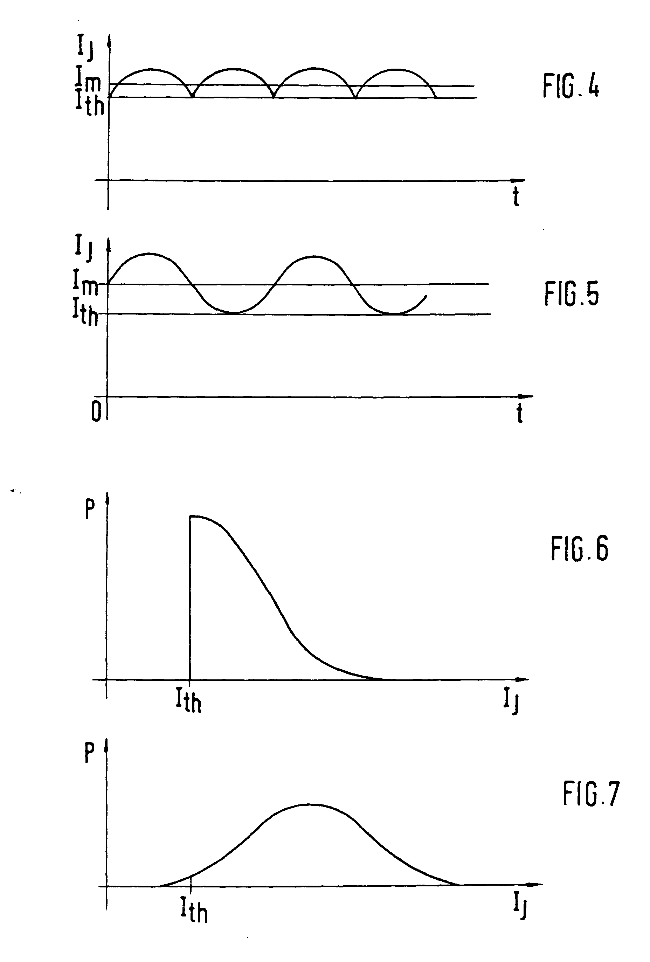

Um die Wirkung der erfindungsgemäßen Sendeeinrichtungen S, S' anschaulicher darstellen zu können, ist der Injektionsstrom I_{J} für ein Sinussignal anstelle des Signals a in Fig. 4 über die Zeit aufgetragen. Zum Vergleich ist in Fig. 5 die gleiche Darstellung für eine bekannte Sendeeinrichtung, z.B. der des eingangs genannten Standes der Technik abgebildet. Es ist zu erkennen, daß der mittlere Wert des Injektionsstromes Im und der maximale Amplitudenwert des Injektionsstromes I_{J} bei der erfindungsgemäßen Sendeeinrichtung wesentlich niedriger liegen. Dies ermöglicht bei der erfindungsgemäßen Sendeeinrichtung S z.B. eine übertragung mit höherem Modulationsgrad und/oder die Ausnützung von weiteren Kanälen.

In Fig. 6 ist die relative Wahrscheinlichkeit P, mit der eine Amplitude des Injektionsstromes I_{J} am Laser der erfindungsgemäßen Sendeeinrichtung S anliegt, für ein fiktives, aber realistisches eingehendes Signal a, das die zu übertragende Nachricht enthalten soll, über den Injektionsstrom I_{J} aufgetragen. Es ist zu erkennen, daß ein Unterschreiten des Schwellwertes Iₜₕ des Injektionsstromes I_{J} und somit das Auftreten des Clipping-Effekts, durch ein beliebig geartetes Signal bedingt, das die zu übertragende Nachricht enthält, nicht möglich ist. Im Vergleich ist in Fig. 7 die gleiche Darstellung für eine bekannte Sendeeinrichtung, z.B. die des eingangs genannten Standes der Technik abgebildet. Es ist zu erkennen, daß das linke Ende der Wahrscheinlichkeitsverteilungskurve unter dem Schwellwert Iₜₕ liegt, was durch Schwankungen des Signalpegels, das die zu übertragende Nachricht enthält, bewirkt sein kann und zu einer Verzerrung des übertragungssignals führt. Ferner wird noch in Analogie zur Betrachtung der Figuren 3 und 4 verdeutlicht, daß eine höhere Leistungsdichte für kleine Amplituden des Injektionsstromes I_{J} erreicht werden kann.

Es wird noch darauf hingewiesen, daß eine Ausbildung der erfindungsgemäßen Sendeeinrichtung als optischer Sender mit direkt moduliertem Laser als Trägerquelle TQ besonders vorteilhaft aber darauf nicht beschränkt ist, sondern daß z.B. eine Sendeeinrichtung mit einer indirekt modulierten Trägerquelle betreibbar ist, wobei das abgetastete Modulationssignal f dann nicht der Signalquelle, sondern der externen Modulationseinrichtung zugeführt werden muß.

## Patentansprüche

1. übertragungssignal, insbesondere ein optisches analoges übertragungssignal, mit einem aus einem Eingangssignal abgeleiteten signalmodulierten Träger, wobei
- das übertragungssignal
aus einem ersten Signalteil (g₁) und aus einem zweiten Signalteil (g₂), in denen die zu übertragende Nachricht enthalten ist, und ggf. aus einem konstanten Anteil (t) besteht und der erste und der zweite Signalteil (g₁, g₂) abgetastet sind,
- das Eingangssignal (a) aus ebenfalls zwei die zu übertragende Nachricht enthaltenden Signalteilen besteht, aus einem ersten Signalteil (a₁) mit Amplitudenwerten größer als oder gleich einem Schwellwert (U₀) und einem zweiten Signalteil (a₂) mit einem Amplitudenwert kleiner als oder gleich dem Schwellwert (U₀),
- die ersten Signalteile (a₁, g₁) und die zweiten Signalteile (a₂, g₂) des Eingangssignals (a) und des übertragungssignals (g) jeweils die gleichen Nachrichten enthalten, und
- die Amplituden der beiden Signalteile (g₁, g₂) des übertragungsignals abzüglich eines ggf. vorhandenen Konstantanteils gleichgerichtet sind,
**dadurch gekennzeichnet, daß** die beiden Signalteile (g₁, g₂) mit unterschiedlichen Abtastfrequenzen (f₁, f₂) abgetastet sind.

2. übertragungssignal nach Anspruch 1, **dadurch gekennzeichnet, daß** die Abtastimpulse des ersten Signalteils (g₁) gegenüber denen des zweiten Signalteils (g₂) phasenverschoben sind.

3. Sendeeinrichtung zum Senden eines übertragungssignals nach Anspruch 1, die Eingangssignale in übertragungssignale derart umformt, daß die Trägerquelle des übertragungssignals auf einem minimalen Arbeitspunkt betreibbar ist, der eine verzerrungsarme übertragung ermöglicht,
**dadurch gekennzeichnet**,
- daß eine Anschlußleitung (AL), über die das Eigangssignal (a₁) eingeht, an einem Leistungsteiler (LT) in zwei Zweige (ZS1, ZS2) aufgeteilt ist,
- daß im ersten Zweig (ZS1) eine Vorrichtung (G1) angeordnet ist, die nur Signalteile (a₁) weiterleitet, deren Amplitude größer als ein Schwellwert (U₀) oder gleich in dem Schwellwert (U₀) sind und im zweiten Zweig (ZS2) eine Vorrichtung (G2) angeordnet ist, die nur Signalteile (a₂) weiterleitet, deren Amplitude kleiner als der Schwellwert (U₀) oder gleich dem Schwellwert (U₀) sind,
- daß sich in jedem der beiden Zweige (ZS1, ZS2) eine Vorrichtung (A1, A2, A1', A2') zum Abtasten der weitergeleiteten Signalteile (b, c) mit unterschiedlichen Abtastfrequenzen (f₁, f₂)
befindet, die die weitergeleiteten Signalteile (b, c) unterschiedlich abtastet,
- daß die beiden Zweige (ZS1, ZS2) in einem Addierer (SA) phasenrichtig zusammengeführt sind, so daß am Ausgang des Addierers (SA) ein aus beiden Signalteilen bestehendes abgetastetes Signal (f) anliegt, wobei die Amplituden beider Signalteile gleichgerichtet sind, und
- daß die zusammengeführten Signalteile einem von der Trägerquelle (TQ) erzeugten Träger (t) aufmoduliert sind.

4. Sendeeinrichtung nach Anspruch 3, **dadurch gekennzeichnet, daß** die Vorrichtung zum Abtasten (A1', A2') die weitergeleiteten Signalteile (b, c) derart abtastet, daß die Abtastimpulse des ersten abgetasteten Signalteiles (d) gegenüber denen des zweiten abgetasteten Signalteils (e) im zusammengeführten abgetasteten Signal (f) phasenverschoben sind.

5. Sendeeinrichtung nach einem der Ansprüche 3 bis 4, **dadurch gekennzeichnet, daß** der Schwellwert (U₀) ein Spannungswert U = 0 Volt ist.

6. Sendeeinrichtung nach einem der Ansprüche 3 bis 5, **dadurch gekennzeichnet, daß** die Trägerquelle (TQ) eine direkt modulierte Laserdiode ist, bei der der Gleichstromanteil des Injektionsstromes (I_{J}) nur zur überschreitung des Laserschwellstromes (Iₜₕ) dient.

7. Empfangseinrichtung zum Empfang eines Übertragungssignals nach Anspruch 1, **dadurch gekennzeichnet**,
- daß sie eine Signalsenke (SS) aufweist, in der das übertragungssignal (g) empfangen wird,
- daß sie eine Eingangsleitung (EL) aufweist, in der das aus dem empfangenen übertragungssignal (g) gewonnene Signal (h) geführt wird, die an einem Leistungsteiler (LT) in zwei Zweige (ZE1, ZE2) aufgeteilt ist,
- daß sich in jedem Zweig eine Vorrichtung (BP1, BP2; A3, A4) zur Weiterleitung nur eines, auf eine vorgegebene Art abgetasteten Signalteils (i, j), befindet,
- daß sich in jedem Zweig ein Demodulator (HD1, HD2) befindet, dem die weitergeleiteten Signalteile (i, j) jeweils zugeführt werden und
- daß die beiden Zweige (ZE1, ZE2) in einem Subtrahierer (EA) phasenrichtig zusammengeführt sind, so daß am Ausgang des Subtrahierers (EA) wieder ein Signal (m) anliegt, das die zu übertragende Nachricht enthält, und dessen Amplituden für die beiden Signalteile hinsichtlich eines vorgegebenen Schwellwertes entgegengesetzte Vorzeichen annehmen.

8. Empfangseinrichtung nach Anspruch 7, **dadurch gekennzeichnet, daß** der Schwellwert ein Spannungswert U = 0 Volt ist.

## Claims

1. Communications signal, in particular, an optical analog communications signal, with a signal-modulated carrier derived from an input signal,
- the communications signal being composed of a first signal component (g₁) and a second signal component (g₂), both containing the information to be transmitted, and possibly of a constant component (t), and the first and second signal components (g₁, g₂) being sampled,
- the input signal (a) likewise being composed of two signal components containing the information to be transmitted, a first signal component (a₁) having amplitude values greater than or equal to a threshold value (U₀) and a second signal component (a₂) having an amplitude value less than or equal to the threshold value (U₀),
- the first signal components (a₁, g₁) and the second signal components (a₂, g₂) of the input signal (a) and of the communications signal (g) each containing the same information, and
- the amplitudes of the two signal components (g₁, g₂) of the communications signal minus a possibly existing constant component being rectified,
**characterized in that** the two signal components (g₁, g₂) are sampled at different sampling frequencies (f₁, f₂).

2. Communications signal according to Claim 1, **characterized in that** the sampling pulses of the first signal component (g₁) are phase-shifted relative to those of the second signal component (g₂).

3. Transmitting device for transmitting a communications signal according to Claim 1, which converts input signals into communications signals in such a manner that the carrier source of the communications signal can be operated at a minimum operating point which permits a low-distortion transmission, **characterized in that**
- a connecting line (AL) through which the input signal (a₁) arrives is divided into two branches (ZS1, ZS2) in a power divider (LT),
- disposed in the first branch (ZS1) is a device (G1) which relays only those signal components (a₁) whose amplitude is greater than a threshold value (U₀) or equal to the threshold value (U₀) and disposed in the second branch (ZS2) is a device (G2) which relays only those signal components (a₂) whose amplitude is less than the threshold value (U₀) or equal to the threshold value (U₀),
- in each of the two branches (ZS1, ZS2) there is a device (A1, A2, A1', A2') for sampling the relayed signal components (b, c) at different sampling frequencies (f₁, f₂) which differentially samples the relayed signal components (b, c),
- the two branches (ZS1, ZS2) are combined in correct phase relation in an adder (SA) so that a sampled signal (f), composed of both signal components, is present at the output of the adder (SA), the amplitudes of both signal components being rectified, and
- the combined signal components are modulated on to a carrier (t) generated by the carrier source (TQ).

4. Transmitting device according to Claim 3, **characterized in that** the device (A1', A2') for sampling samples the relayed signal components (b, c) in such a manner that, in the combined sampled signal (f), the sampling pulses of the first sampled signal component (d) are phase-shifted relative to those of the second sampled signal component (e).

5. Transmitting device according to either of Claims 3 or 4, **characterized in that** the threshold value (U₀) is a voltage value of U = 0 volt.

6. Transmitting device according to any one of Claims 3 to 5, **characterized in that** the carrier source (TQ) is a directly modulated laser diode in which the direct current component of the injection current (Iⱼ) serves only to exceed the laser threshold current (Iₜₕ).

7. Receiving device for receiving a communications signal according to Claim 1, **characterized in that**
- it comprises a signal sink (SS) in which the communications signal (g) is received,
- it comprises an input line (EL) in which the signal (h) derived from the received communications signal (g) is carried and which is divided in a power divider (LT) into two branches (ZE1, ZE2),
- in each branch there is a device (BP1, BP2; A3, A4) for relaying only a signal component (i, j) sampled in a predetermined manner,
- in each branch there is a demodulator (HD1, HD2) to which are fed the respective relayed signal components (i, j),
- the two branches (ZE1, ZE2) are combined in correct phase relation in a subtractor (EA) so that at the output of the subtractor (EA) a signal (m) is again present which contains the information to be transmitted and whose amplitudes for the two signal components assume opposite signs with respect to a predetermined threshold value.

8. Receiving device according to Claim 7, **characterized in that** the threshold value is a voltage value of U = 0 volt.

## Revendications

1. Signal de transmission, en particulier un signal de transmission analogique optique, avec une porteuse modulée par un signal dérivée à partir d'un signal d'entrée, dans lequel
- le signal de transmission se compose d'une première partie de signal (g₁) et d'une deuxième partie de signal (g₂), qui contiennent le message à transmettre, et éventuellement d'une composante constante (t), et les première et deuxième parties de signal (g₁, g₂) sont analysées,
- le signal d'entrée (a) se compose également de deux parties de signal contenant le message à transmettre et d'une première partie de signal (a₁) avec des valeurs d'amplitudes supérieures ou égales à une valeur de seuil (U₀) et d'une deuxième partie de signal (a₂) avec une valeur d'amplitude inférieure ou égale à la valeur de seuil (U₀),
- les premières parties de signal (a₁, g₁) et les deuxièmes parties de signal (a₂, g₂) du signal d'entrée (a) et du signal de transmission (g) contiennent respectivement les mêmes messages, et
- les amplitudes des deux parties de signal (g₁, g₂) du signal de transmission, déduction faite d'une composante constante éventuellement présente, sont redressées,
**caractérisé en ce que** les deux parties de signal (g₁, g₂) sont analysées à des fréquences d'analyse (f₁, f₂) différentes.

2. Signal de transmission selon la revendication 1, **caractérisé en ce que** les impulsions d'analyse de la première partie de signal (g₁) sont déphasées par rapport à celles de la deuxième partie de signal (g₂)

3. Dispositif d'émission pour émettre un signal de transmission selon la revendication 1, qui transforme des signaux d'entrée en signaux de transmission de telle sorte que la source de porteuse du signal de transmission peut être exploitée en un point de fonctionnement dynamique minimal qui permet une transmission avec peu de distorsions, **caractérisé en ce que**
- une ligne de connexion (AL), à travers laquelle arrive le signal d'entrée (a₁) est divisée en deux branches (ZS1, ZS2) au niveau d'un diviseur de puissance (LT),
- dans la première branche (ZS1), un dispositif (G1) est disposé qui retransmet uniquement des parties de signal (a₁) dont l'amplitude est supérieure à une valeur de seuil (U₀) ou égale à la valeur de seuil (U₀), et dans la deuxième branche (ZS2) un dispositif (G2) est disposé qui retransmet uniquement des parties de signal (a₂) dont l'amplitude est inférieure à la valeur de seuil (U₀) ou égale à la valeur de seuil (U₀),
- dans chacune des deux branches (ZS1, ZS2), il y a un dispositif (A1, A2, A1', A2') pour analyser les parties de signal retransmises (b, c) à des fréquences d'analyse différentes (f₁, f₂) qui balaye de façon différente les parties de signal retransmises (b, c),
- les deux branches (ZS1, ZS2) sont assemblées en concordance de phase dans un additionneur (SA) de sorte qu'à la sortie de l'additionneur (SA), un signal analysé (f) composé des deux parties de signal est appliqué, les amplitudes des deux parties de signal étant redressées, et
- les parties de signal assemblées sont modulées sur une porteuse (t) générée par la source de porteuse (TQ).

4. Dispositif d'émission selon la revendication 3, **caractérisé en ce que** le dispositif pour analyser (A1', A2') les parties de signal retransmises (b, c) effectue l'analyse de telle sorte que les impulsions d'analyse de la première partie de signal analysée (d) sont déphasées par rapport à celles de la deuxième partie de signal analysée (e) dans le signal analysé assemblé (f)

5. Dispositif d'émission selon l'une quelconque des revendications 3 à 4, **caractérisé en ce que** la valeur de seuil (U₀) est une valeur de tension U = 0 volt.

6. Dispositif d'émission selon l'une quelconque des revendications 3 à 5, **caractérisé en ce que** la source de porteuse (TQ) est une diode laser modulée directement, dans laquelle la composante de courant continu du courant d'injection (I_{J}) sert uniquement au dépassement du courant de seuil laser (Iₜₕ).

7. Dispositif de réception pour recevoir un signal de transmission selon la revendication 1, **caractérisé en ce que**
- il présente un collecteur de signaux (SS), dans lequel le signal de transmission (g) est reçu,
- il présente une ligne d'entrée (EL), dans laquelle le signal (h) obtenu à partir du signal de transmission reçu (g) est conduit, cette ligne étant divisée en deux branches (ZE1, ZE2) au niveau d'un diviseur de puissance (LT),
- dans chaque branche, il y a un dispositif (BP1, BP2; A3, A4) pour la retransmission d'une seule partie de signal (i, j) analysée d'une manière prédéterminée,
- dans chaque branche, il y a un démodulateur (HD1, HD2) auquel sont respectivement amenées les parties de signal retransmises (i, j), et
- les deux branches (ZE1, ZE2) sont assemblées en concordance de phase dans un soustracteur (EA) de sorte qu'à la sortie du soustracteur (EA) un signal est appliqué à nouveau qui contient le message à transmettre et dont les amplitudes pour les deux parties de signal ont des signes opposés quant à une valeur de seuil prédéterminée.

8. Dispositif de réception selon la revendication 7, **caractérisé en ce que** la valeur de seuil est une valeur de tension U = 0 volt.
